Europäisches Patentamt

European Patent Office

Office européen des brevets

(19)

(11) Veröffentlichungsnummer: **0 264 789 B1**

# EUROPÄISCHE PATENTSCHRIFT

(12)

(45) Veröffentlichungstag der Patentschrift: **26.08.92**

(21) Anmeldenummer: **87114966.2**

(22) Anmeldetag: **13.10.87**

(51) Int. Cl.⁵: **A23P 1/14**, A23F 5/44,
A23L 1/38, A23L 1/211,
A23L 1/10, A23F 5/04

(54) **Verfahren zur Herstellung von für den Menschen geniessbaren Produkten oder zur Geschmacksumwandlung aus bzw. von pflanzlichen Stoffen.**

(30) Priorität: **22.10.86 DE 3635980**

(43) Veröffentlichungstag der Anmeldung:
**27.04.88 Patentblatt 88/17**

(45) Bekanntmachung des Hinweises auf die
Patenterteilung:
**26.08.92 Patentblatt 92/35**

(84) Benannte Vertragsstaaten:
**AT BE CH DE ES FR GB GR IT LI LU NL SE**

(56) Entgegenhaltungen:
CA-A- 1 184 418
DE-C- 3 529 229

PATENT ABSTRACTS OF JAPAN Band 10. Nr.
166 / C-353) (2222) 13. Juni 1986

(73) Patentinhaber: **Heinz Schaaf Nahrungsmittel-
Extrusionstechnik
Ouellenweg 14 + 19a
W-6277 Bad Camberg/Oberselters(DE)**

(72) Erfinder: **Schaaf, Heinz-Josef
Ouellenweg 19a
W-6277 Bad Camberg-Oberselters(DE)**

(74) Vertreter: **Lewald, Dietrich, Dipl.-Ing.
Patentanwalt, European Patent Attorney,
Pienzenauerstrasse 2
W-8000 München 80(DE)**

EP 0 264 789 B1

## Beschreibung

Die Erfindung betrifft ein Verfahren zur Herstellung von für den Menschen genießbaren Produkten oder zur Geschmacksumwandlung aus bzw. von pflanzlichen Stoffen.

Es ist bekannt, pflanzliche Stoffe durch chemische Reaktionen umzuwandeln, so daß entweder aus für den Menschen an sich ungenießbaren pflanzlichen Produkten genießbare Produkte werden, oder Stoffe herzustellen, die ein völlig anderes Aroma aufweisen als die Ausgangsstoffe.

Der Erfindung liegt die Aufgabe zugrunde ein Verfahren zu schaffen, bei welchem ohne Chemikalien pflanzliche Stoffe zu anderen, für den Menschen genießbaren Stoffen, umgewandelt werden.

Diese Aufgabe wird erfindungsgemäß dadurch gelöst, daß die pflanzlichen Stoffe in einem schnellaufenden Extruder unter Luftabschluß in weniger als 5 Sekunden von 20°C auf eine Temperatur von 150°C bis 500°C aufgeheizt werden.

Durch die Behandlung der pflanzlichen Stoffe auf einem sehr hohen Energieniveau in sehr kurzer Zeit erfolgt eine Maillard-Reaktion, bei welcher unter Luftabschluß eine Aromaumwandlung der pflanzlichen Stoffe erfolgt. Da keine Luft und damit kein Sauerstoff an das behandelte Produkt gelangt, kann keine Oxidation und keine Verbrennung der pflanzlichen Stoffe erfolgen.

Die pflanzlichen Stoffe werden vorzugsweise in Form eines stark befeuchteten rieselfähigen Granulates in den Extruder eingegeben und in diesem über die schnellaufende Schnecke stark geknetet. Nach dem Austritt aus der Hochdruckzone des Extruders, d.h. aus der Extruderdüse, erfolgt in einem sehr kurzen Zeitraum von 1/100 bis 1/10 Sekunde eine Verdampfung der in dem Extrudat vorhandenen Feuchtigkeit und das Extrudat wird schnell auf etwa 100°C abgekühlt.

Vorzugsweise wird das Verfahren verwendet zur Herstellung von Kaffee-Ersatz aus Getreide. Dabei wird ein Teig aus Weizen oder Roggen in den Extruder eingegeben und innerhalb eines Zeitraums, der von der Geschwindigkeit der Extruderschnecke abhängig ist, in weniger als 5 Sekunden auf 150° bis 500°C erwärmt. Da keine Luft an den Getreideteig gelangen kann, erfolgt keine Bräunung durch Oxidation sondern lediglich eine Maillard-Reaktion. Der Bräunungsgrad des Extrudates hängt dabei von der Feuchtigkeit des verwendeten Getreides ab.

Wenn das Extrudat nur sehr schwach gebräunt ist, kann zur Erhaltung einer dunkelbraunen Farbe, wie sie für Kaffee typisch ist, eine Nachröstung des Extrudates erfolgen. Dieses wird dazu etwa linsengroß geschnitten und auf bekannte Art einem Röstprozeß unterworfen.

Gemäß einer weiteren bevorzugten Ausführungsform wird das Verfahren angewendet zur Herstellung eines nach Erdnuß schmeckenden Produktes aus Sojaschrot. Bei der Behandlung von Sojaschrot mit dem erfindungsgemäßen Verfahren in einem schnellaufenden Extruder erfolgt eine Geschmacksumwandlung des Sojaschrotes in eine Produkt, das nach Erdnüssen schmeckt. Zur Zubereitung von Erdnußbutter wird das Extrudat gemahlen und mit Fett und Salz zu einem Ernußbuttersubstitut vermischt. Dieses Erdnußbuttersubstitut kann entweder direkt für den Genuß verwendet werden oder es können andere extrudierte Produkte damit überzogen werden, um beispielsweise ein Substitut für Erdnußflips herzustellen.

## Patentansprüche

1. Verfahren zur Herstellung von für den Menschen genießbaren Produkten oder zur Geschmacksumwandlung aus bzw. von pflanzlichen Stoffen, dadurch **gekennzeichnet,** daß die pflanzlichen Stoffe in einem schnellaufenden Extruder unter Luftabschluß in weniger als 5 Sekunden auf eine Temperatur von 150°C bis 500°C aufgeheizt werden.

2. Verfahren nach Anspruch 1, dadurch **gekennzeichnet,** daß die pflanzlichen Stoffe in Form eines stark befeuchteten rieselfähigen Granulates in den Extruder eingegeben und in diesem stark geknetet werden.

3. Verfahren nach Anspruch 1 oder 2, verwendet zur Herstellung von Kaffee-Ersatz aus Getreide.

4. Verfahren nach Anspruch 3, dadurch **gekennzeichnet,** daß das Getreide Roggen oder Weizen ist.

5. Verfahren nach Anspruch 3 oder 4, dadurch **gekennzeichnet,** daß das aus dem Extruder austretende Extrudat geschnitten wird.

6. Verfahren nach Anspruch 5, dadurch **gekennzeichnet,** daß das Extrudat nachgeröstet wird.

7. Verfahren nach Anspruch 1 oder 2, verwendet zur Herstellung von Erdnußaromat aus Sojaschrot.

8. Verfahren nach Anspruch 7, dadurch **gekennzeichnet,** daß das extrudierte Erdnußaromat gemahlen und mit Fett und Salz zu Erdnußbuttersubstitut vermischt wird.

## Claims

1. Process for the preparation of products palatable to humans from, or for flavour conversion of, vegetable substances, characterised in that the vegetable substances are heated in a high-speed extruder with exclusion of air to a temperature of from 150°C to 500°C in less than 5 seconds.

2. Process according to Claim 1, characterised in that the vegetable substances are fed to the extruder in the form of highly moistened flowable granules and are intensively kneaded in the extruder.

3. Process according to Claim 1 or 2, employed for the preparation of coffee substitute from cereal.

4. Process according to Claim 3, characterised in that the cereal is rye or wheat.

5. Process according to Claim 3 or 4, characterised in that the extrudate leaving the extruder is sliced.

6. Process according to Claim 5, characterised in that the extrudate is subsequently roasted.

7. Process according to Claim 1 or 2, employed for the preparation of peanut-flavoured product from soya meal.

8. Process according to Claim 7, characterised in that the extruded peanut-flavoured product is ground and is mixed with fat and salt to give a peanut butter substitute.

**Revendications**

1. Procédé pour préparer des produits consommables par l'homme ou modifier le goût de ou à partir de substances végétales, caractérisé en ce qu'on chauffe les substances végétales dans une extrudeuse extra-rapide à l'abri de l'air, pendant moins de 5 secondes à une température de 150°C à 500°C.

2. Procédé selon la revendication 1, caractérisé en ce que les substances végétales sont introduites dans l'extrudeuse, sous la forme de granulés fortement humidifiés, aptes à s'écouler, et sont fortement malaxés dans cette dernière.

3. Procédé selon la revendication 1 ou 2, utilisé pour fabriquer un ersatz de café à partir de céréales.

4. Procédé selon la revendication 3, caractérisé en ce que la céréale est du seigle ou du froment.

5. Procédé selon la revendication 3 ou 4, caractérisé en ce qu'on découpe l'extrudat sortant de l'extrudeuse.

6. Procédé selon la revendication 5, caractérisé en ce qu'on soumet l'extrudat à un grillage ultérieur.

7. Procédé selon la revendication 1 ou 2, utilisé pour la fabrication d'une substance aromatique de cacahuète à partir de déchets de soja.

8. Procédé selon la revendication 7, caractérisé en ce qu'on broie la substance aromatique extrudée de cacahuètes et qu'on y mélange une matière grasse et du sel pour obtenir un ersatz de beurre de cacahuète.